# FASCICULE DE BREVET EUROPEEN

(11) **EP 2 911 866 B1**
(45) Date de publication et mention de la délivrance du brevet: **12.06.2019**
(21) Numéro de dépôt: 13779853.4
(22) Date de dépôt: 22.10.2013
(51) Int. Cl.: B29C 70/48, B29C 70/54, B29C 70/56

(54) **PROCEDE DE MOULAGE DE MATERIAU COMPOSITE DANS LEQUEL UN TISSU DE FIBRES EST TENDU DANS UN CADRE DE MAINTIEN AVANT INJECTION D'UNE MATRICE**
VERFAHREN ZUM FORMEN EINES VERBUNDMATERIALS, BEI DEM EIN FASERGEWEBE IN EINEM HALTERAHMEN GESTRECKT WIRD, BEVOR EINE MATRIX EINGESPRITZT WIRD.
METHOD FOR MOLDING A COMPOSITE MATERIAL, IN WHICH A FIBER FABRIC IS STRETCHED IN A HOLDING FRAME BEFORE INJECTING A MATRIX

(30) Priorité: 25.10.2012 FR 1260195
(43) Date de publication de la demande: 02.09.2015
(73) Titulaire: VALEO SYSTEMES THERMIQUES, 78320 Le Mesnil Saint-Denis (FR)
(72) Inventeur: LANARD, Jean-Louis, F-78810 Feucherolles (FR); MESKIN, Issmail, F-78320 Le Mesnil Saint-Denis (FR)
(74) Mandataire: Metz, Gaëlle
(86) Numéro de dépôt international: PCT/EP2013/072036
(87) Numéro de publication internationale: WO 2014/064085

(56) Documents cités:
- WO-A1-2009/130120
- WO-A2-03/061930
- DE-A1- 10 153 035
- DE-B3-102009 028 456

## Description

La présente invention concerne un procédé de moulage de matériau composite, du type comprenant une matrice durcissant au moulage, et un renfort en tissu de fibres.

Les matériaux composites à matrice type résine durcissant au moulage avec un renfort en tissu de fibres sont usuellement obtenus par surmoulage du tissu formant renfort au moyen de la résine formant matrice.

Ce surmoulage a lieu dans un moule, généralement en deux parties complémentaires, formant respectivement des faces opposées de la pièce désirée. Le tissu de fibres, généralement préimprégné, est dans un premier temps préchauffé, ce qui accroît sa déformabilité. Il est ensuite transporté jusqu'au moule, par exemple au moyen de pinces, et mis en place dans une des parties dudit moule.

Le moule est ensuite fermé par mise en place de la deuxième partie du moule, ce qui contribue à la mise en place du tissu de fibres. La matrice est ensuite injectée dans le moule, et durcie, par exemple par refroidissement ou par réticulation.

Un problème peut survenir lors du déplacement du tissu de fibres, en particulier préimprégné, une fois qu'il est réchauffé. En effet, sa mise en place dans le moule peut conduire à un pli dans ledit tissu. En outre, le tissu préchauffé a tendance à coller à lui-même en cas de repli dû au pli.

De tels plis nuisent à la qualité du matériau obtenu en ce qu'une portion extrémale de la pièce moulée peut alors être dépourvue de renfort, et en ce que la surépaisseur qu'ils représentent est compressée lors du moulage. Cette surépaisseur s'imprègne alors moins bien de matrice, et peut gêner la pénétration de ladite matrice dans une portion du moule située au delà du pli par rapport au point d'injection de la matrice.

Ces effets contribuent à une fragilisation de la pièce en matériau composite moulé obtenue.

Pour réduire le risque de pliage du tissu de fibres formant renfort, il est d'usage de manipuler précautionneusement et lentement ledit tissu, ce qui conduit à une perte d'efficacité dans le cycle et occasionne un refroidissement partiel du tissu avant son arrivée au moule.

Le document DE 10 2009 028456 divulgue un procédé de moulage de matériau composite, caractérisé en ce qu'il comporte des étapes dans lesquelles :
- un tissu de fibres formant renfort est tendu dans un cadre de maintien,
- le tissu de fibres tendu dans le cadre de maintien est mis en place dans un moule,
- une matrice est injectée dans le moule de sorte à imprégner le tissu de fibre pour obtenir le matériau composite,
- le matériau composite et le cadre de maintien sont retirés du moule.

Afin de répondre au moins partiellement au besoin précédemment mentionné l'invention a pour objet un procédé de moulage de matériau composite selon l'objet de la revendication 1.

Le procédé de moulage de matériau composite ainsi réalisé permet, par l'utilisation du cadre, de diminuer grandement la probabilité d'un pli dans le tissu de fibres formant renfort du matériau composite.

Ledit procédé peut présenter une ou plusieurs des caractéristiques suivantes, prises seules ou en combinaison.

Il comporte en outre une étape supplémentaire entre la tension du tissu de fibres sur le cadre de maintien et l'étape de mise en place dans le moule, dans laquelle le tissu de fibres tendu sur le cadre de maintien est préchauffé.

Il comporte une étape supplémentaire entre l'étape de mise en place dans le moule et l'étape de retrait du moule, dans laquelle des attaches du cadre de maintien se désolidarisent du tissu de fibres.

Il comporte une étape supplémentaire d'ajustement de la tension du tissu de fibres en utilisant des moyens d'ajustement de la tension du tissu de fibres portés par le cadre.

Il comporte en outre une étape préliminaire d'assemblage du tissu de fibres à partir de plusieurs éléments de tissu disposés selon les besoins structurels du matériau composite désiré.

Les différents éléments de tissu diffèrent entre eux par au moins unes des caractéristiques suivantes : leur épaisseur, leur densité, leur matériau, leur traitement préalable, leur empilement.

Le tissu de fibres comporte un des matériaux suivants : fibres de verre, fibres de carbone, fibres d'aramide.

La matrice comporte un des matériaux suivants : résine thermoplastique, résine époxyde, vinyléther, polyamide, polyester.

L'invention a aussi pour objet le moule pour le moulage d'un matériau composite associé, dans lequel ledit matériau composite comprend un renfort en tissu de fibres et une matrice durcissante injectable, comportant deux parties complémentaires définissant un espace d'injection dans lequel le matériau composite est moulé, caractérisé en ce qu'il comporte en outre un logement entourant un espace d'injection pour un cadre de maintien formant support pour le tissu de fibres destiné à être escamoté dans ledit logement lors du moulage.

Enfin, est décrit le cadre de maintien associé, destiné à former support pour un tissu de fibres formant renfort d'un matériau composite, ledit cadre de maintien comprenant un cadre extérieur formant un contour extérieur destiné à entourer le tissu de fibres et portant un certain nombre d'attaches destinées à solidariser le tissu de fibres et le cadre de maintien, ledit cadre de maintien étant destiné à être escamoté dans un logement d'un moule dans lequel le matériau composite est moulé.

En particulier, le cadre de maintien peut être composé de barres métalliques soudées.

Ledit cadre peut en outre ou en alternative comporter des bras, portés par le cadre extérieur et pointant vers l'intérieur de celui-ci, et au bout desquels sont placées des attaches.

Les attaches peuvent comporter des pinces, des aiguilles, ou des crochets ainsi qu'un un mécanisme d'actionnement contrôlant la libération du tissu de fibres par l'attache, ledit mécanisme étant configuré pour libérer le tissu de fibres lors du moulage.

Les bras peuvent comporter des moyens de régulation de la tension du tissu de fibres.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre schématiquement un moule pour le moulage d'une pièce de matériau composite selon l'invention,
- les figures 2a à 2d montrent différents modes de réalisation d'attaches pour un cadre selon l'invention,
- la figure 3 montre schématiquement un tissu de fibres tendu sur un cadre selon l'invention, et
- la figure 4 montre un organigramme schématique simplifié reprenant les étapes principales d'un mode de réalisation du procédé selon l'invention.

Sur toutes les figures, les mêmes références se rapportent aux mêmes éléments.

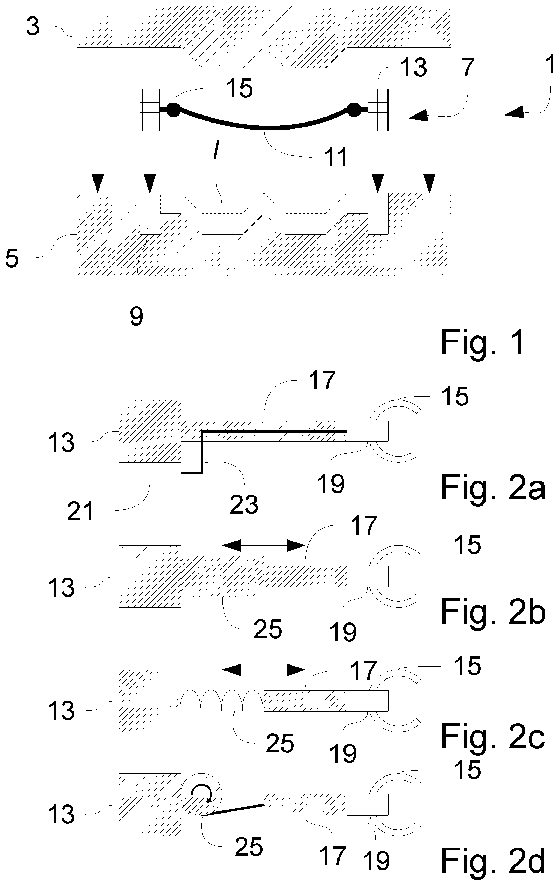

En figure 1 est montré de façon schématique un moule 1 pour le moulage d'un matériau composite par injection d'une matrice durcissante sur un renfort en tissu de fibres.

Ledit moule 1 comprend deux parties 3, 5 de forme complémentaire entre lesquelles a lieu le moulage dans un espace d'injection / que les formes complémentaires des deux parties 3, 5 délimitent à l'état assemblé.

Un cadre de maintien 7 est associé au moule 1. Ledit moule 1 comporte sur au moins une de ses parties 3, 5 un logement 9 dans lequel le cadre de maintien 7 est destiné à être escamoté lors du moulage. Le logement 9 est en particulier disposé de sorte à ce que le cadre entoure l'espace d'injection *I* lorsqu'il est escamoté.

Le logement 9 peut en particulier être partagé entre les deux parties 3, 5, une partie du cadre 7 étant escamoté dans chacune des parties 3, 5 lorsque celles-ci sont assemblées pour le moulage.

Dans le cadre 7 est tendu un tissu de fibres 11 formant le renfort du matériau composite. Le tissu de fibres 11 est par exemple un tissu de fibres de verre longues et laminées ou calandrées, un tissu de fibres de carbone, un tissu de fibres aramides, ou toute autre forme de fibres connues de l'homme du métier.

La matrice peut comporter un ou plusieurs des matériaux suivants : résine thermoplastique, résine époxyde, vinyléther, polyamide, polyester, ou toute autre matière connue de l'homme du métier pour une utilisation en tant que matrice de matériau composite.

Le cadre de maintien 7 comporte un cadre extérieur 13, par exemple composé de barres de métal soudées ou attachées, formant un contour extérieur destiné à entourer le tissu de fibres 11. Le cadre extérieur 13 porte un certain nombre d'attaches 15, éventuellement au bout de bras 17, attachés au cadre extérieur 13 et pointant vers l'intérieur dudit cadre extérieur 13.

Les attaches 15 peuvent par exemple être des pinces, des aiguilles, ou des crochets. Ces attaches 15 sont en particulier configurées pour, au moins pour certaines d'entre elles, s'ouvrir pendant le moulage du matériau composite.

En particulier, au moins une portion des attaches 15 peut être configurée pour s'ouvrir entre le moment de l'insertion du cadre de maintien 7 dans le logement 9 du moule 1 et le moment où le matériau composite est sorti du moule 1.

Par exemple, l'ouverture peut avoir lieu lors de la mise en place respective des parties 3, 5 du moule 1 pour former l'espace d'injection *I*, lors de l'injection de la matrice, lors de la séparation des parties 3, 5, ou lors du retrait du matériau composite moulé hors du moule 1, voire après un ou plusieurs procédés ultérieurs de fabrication de pièce à partir du matériau composite moulé tels qu'un refroidissement, une application de peinture ou de vernis.

Les figures 2a à 2d montrent différents modes de réalisation de bras 17 et d'attaches 15.

Les figures 2a à 2d montrent un bras 17 partant d'une portion de cadre extérieur 13 du cadre 7 vue en coupe, et une attache 15 au bout du bras 17 représentée schématiquement sous forme de pince.

En figure 2a, l'attache 15 comporte un mécanisme d'actionnement 19, relié à une unité de contrôle 21. Le mécanisme d'actionnement 19 est situé auprès de l'attache 15, tandis que l'unité de contrôle 21 est avantageusement disposée sur le cadre 7, et donc à distance de l'espace d'injection I.

Le mécanisme 19 et l'unité de contrôle 21 sont reliées par une ligne d'actionnement 23, configurée pour transmettre l'actionnement de l'unité de contrôle 21 au mécanisme d'actionnement 19.

L'unité de contrôle 21 peut en particulier comporter un raccord à des actionneurs (non représentés) portés par le moule 3, 5 au niveau du logement 9.

L'unité de contrôle 21 initie le relâchement du tissu 11 en actionnant le mécanisme d'actionnement 19, ledit mécanisme contrôlant la libération du tissu de fibres 11 par l'attache, ledit mécanisme étant configuré pour libérer le tissu de fibres 11 lors du moulage, afin que le tissu de fibres 11 soit mis en place dans le moule, qui peut comprendre des creux et bosses sans subir de tensions supplémentaires pouvant conduire à sa rupture.

Par exemple, le mécanisme d'actionnement peut comprendre un servomoteur ou des éléments piézoélectriques causant une ouverture de l'attache lorsqu'ils sont alimentés. L'unité de contrôle 21 est alors une alimentation asservie et la ligne d'actionnement 23 est alors une ligne électrique véhiculant un courant d'alimentation de l'unité de contrôle 21 au mécanisme d'actionnement 19.

En alternative, le mécanisme d'actionnement 19 peut comporter des leviers, reliés à un câble bowden formant la ligne d'actionnement 23. L'unité de contrôle 21 peut alors comporter un raccord à l'extrémité opposée du câble bowden, permettant l'actionnement depuis des actionneurs portés par le moule 1.

Les figures 2b à 2d montrent des modes de réalisation de bras 17 et attaches 15 comportant des moyens de régulation de la tension 25 du tissu de fibres 11.

En figure 2b, lesdits moyens de régulation de la tension 25 comportent une portion de bras 17 télescopique : une portion du bras 17 est un tube creux dans lequel vient se loger une autre partie du bras 17. La longueur de bras 17 est alors contrôlée par déplacement, par exemple au moyen d'un servomoteur, d'un système à vérin ou d'un pas de vis pour réguler en conséquence la tension du tissu de fibres 11.

En figure 2c, lesdits moyens de régulation de la tension 25 comportent une portion de bras 17 élastique : un tronçon du bras 17 est remplacé par des moyens élastiques, comme par exemple un ressort hélicoïdal. La constante de raideur desdits moyens élastiques 25 et leur élongation au cours du moulage permettent un contrôle de la tension du tissu de fibres 11.

En figure 2d, lesdits moyens de régulation de la tension 25 comportent un filin et un enrouleur : un tronçon du bras 17 est remplacé par un filin, par exemple un câble métallique, et un enrouleur permet de contrôler la longueur du bras 17 par enroulement ou déroulement du filin. L'enrouleur est ici représenté à la base du bras 17, mais peut en alternative se trouver intégré dans le cadre 7.

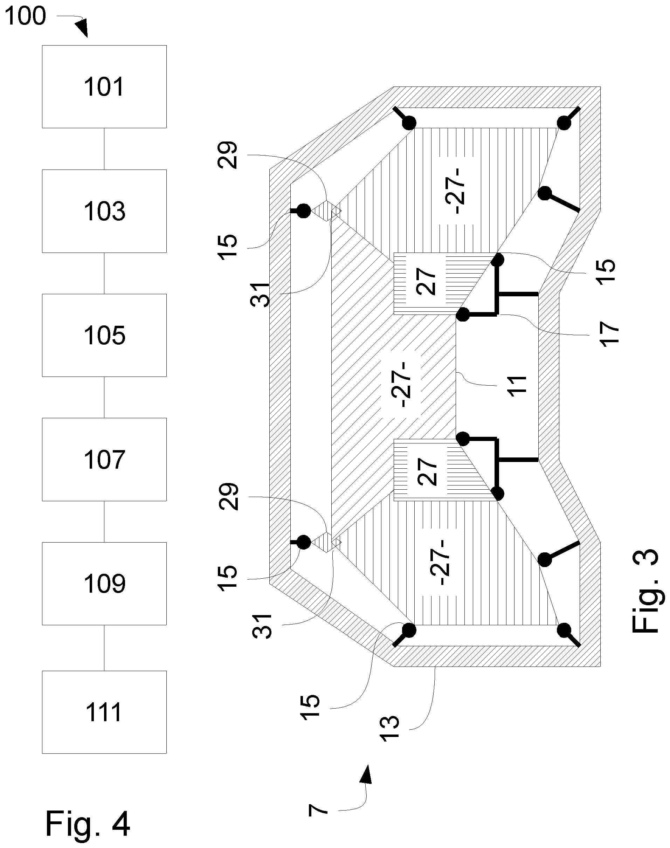

La figure 3 montre plus en détails un tissu de fibres 11 tendu sur un cadre de maintien 7. Le tissu de fibres 11 comporte plusieurs éléments 27, qui sont autant de pièces de tissus de fibres différents qui, correctement assemblées, forment le tissu de fibres 11 destiné à former le renfort du matériau composite. Ces éléments 27 du tissu de fibres 11 peuvent différer par la nature ou l'orientation de leurs fibres, leur épaisseur, la nature de leur traitement préalable, leur arrangement et/ou être obtenus par empilement de plusieurs couches de tissu de fibres.

En particulier, les éléments 27 de tissu peuvent être différemment laminés, calandrés ou pré-imprégnés.

Les éléments 27 de tissu permettent d'adapter les propriétés structurelles locales de la pièce moulée aux contraintes rencontrées lors de l'utilisation. Par exemple des zones au niveau desquelles de fortes contraintes sont attendues peuvent avoir une épaisseur de renfort double.

Une zone à forte contraintes peut aussi être renforcée avec des fibres plus solides et potentiellement plus coûteuses, telles que des fibres d'aramide. En ne renforçant le tissu de fibres 11 que localement, le surcoût engendré par les matériaux plus solides utilisés pour le renforcement est limité.

De telles zones à forte contraintes sont par exemple les zones autour d'une fixation telle qu'une vis ou un rivet, les zones où un impact ou une force extérieure est probable, les zones soumises à une torsion ou pression, etc. Des pièces additionnelles telles que des oeillets, plaques plastiques ou métalliques, câbles ou tiges de renfort peuvent aussi être mises en place sur le tissu de fibres 11 tendu dans le cadre de maintien 7 pour être surmoulées par la matrice.

Le tissu de fibres 11 peut aussi comporter des languettes 29 de maintien temporaires, qui s'étendent à partie de la périphérie dudit tissu de fibres 11 et sont reliées aux attaches 15. Les languettes 29 sont destinées à être coupées après le moulage, par exemple par découpage, par cisaillement ou par cassage après imprégnation puis ponçage.

Le moule 1 peut en particulier être conformé afin d'empêcher ou d'amoindrir l'imprégnation des fibres des languettes 29 au moulage en les comprimant, afin que lesdites languettes 29 puissent être découpées plus simplement.

Lesdites languettes 29 peuvent être raccordées à la portion de tissu de fibres 11 formant la pièce moulée par un étranglement 31 plus fin que la languette 29 elle-même et formant un prédécoupage facilitant le détachement ultérieur de la languette 21.

La figure 3 montre dans un organigramme simplifié un mode de réalisation du procédé de moulage 100 pour pièce en matériau composite.

La première étape 101 est la tension du tissu de fibres 11 dans le cadre 7. Cette tension se fait par exemple au moyen des attaches 15, reliées à des points préétablis du tissu de fibres 11.

Au cours d'une deuxième étape 103, optionnelle selon le procédé utilisé, le tissu de fibres 11 porté par le cadre 7 est préchauffé, pour le ramollir, notamment en faisant fondre une pré-imprégnation en résine ou thermoplastique, possiblement celle utilisée pour former la matrice du matériau composite.

La troisième étape 105 est la mise en place du cadre 7 et du tissu de fibres 11 dans le moule 1, par exemple en plaçant au moins partiellement le cadre 7 dans le logement 9, et en appuyant le tissu de fibres 11 contre une parties 3, 5 du moule 1 ; en particulier dans l'espace d'injection entre les deux parties 3, 5.

La quatrième étape 107 est la fermeture du moule 1 et l'injection dans l'espace d'injection *I* de la matrice en thermoplastique ou résine imprégnant le tissu de fibre 11 pour former le matériau composite.

La cinquième étape 109 est une étape de retrait du cadre de maintien 7, si le cadre 7 et le matériau composite obtenu ne se sont pas désolidarisé au cours du moulage. Cette étape 109 peut comporter le relâchement d'attaches 15 non ouvertes pendant les étapes précédentes de mise en place du cadre 7 dans le moule 1 ou d'injection de la matrice.

La sixième et dernière étape 111 est une étape de finition. Cette étape comporte les éventuels traitements ultérieurs à la sortie du moule 1, par exemple la découpe de languettes 21 et le ponçage des bords de la pièce de matériau composite.

Si les attaches 15 laissent des trous non-désirés ceux-ci sont alors rebouchés, si elles laissent des aiguilles ou autre éléments perdus par immersion dans la masse, celles ou ceux-ci sont coupés à ras afin de ne pas dépasser. Si, à l'inverse, les attaches 15 laissent des protubérances, celles-ci sont enlevées, par exemple par ponçage, ou aplaties par chauffage et remoulage local.

Le procédé de moulage 100 selon l'invention permet ainsi d'obtenir une pièce moulée en matériau composite d'une façon plus rapide et présentant moins de risque de formation d'un pli du tissu de fibres 11 formant renfort lors du moulage 100 et de ses étapes préparatoires (préchauffage du tissu 11 et mise en place dans le moule 1).

## Revendications

1. Procédé de moulage de matériau composite, **caractérisé en ce qu'**il comporte des étapes dans lesquelles :
- un tissu de fibres (11) formant renfort est tendu dans un cadre de maintien (7),
- le tissu de fibres (11) tendu dans le cadre de maintien (7) est mis en place dans un moule (1) selon la revendication 9, et le cadre de maintien (7) est escamoté dans un logement du moule (1) de forme correspondante,
- une matrice est injectée dans le moule (1) de sorte à imprégner le tissu de fibre (11) pour obtenir le matériau composite,
- le matériau composite et le cadre de maintien (7) sont retirés du moule (1).

2. Procédé selon la revendication 1, **caractérisé en ce qu'**il comporte en outre une étape supplémentaire entre la tension du tissu de fibres (11) sur le cadre de maintien (7) et l'étape de mise en place dans le moule (1), dans laquelle le tissu de fibres (11) tendu sur le cadre de maintien (7) est préchauffé.

3. Procédé selon la revendication 1 ou 2, **caractérisé en ce qu'**il comporte une étape supplémentaire entre l'étape de mise en place dans le moule (1) et l'étape de retrait du moule (1), dans laquelle des attaches (15) du cadre de maintien (7) se désolidarisent du tissu de fibres (11).

4. Procédé selon l'une des revendications 1 à 3, **caractérisé en ce qu'**il comporte une étape supplémentaire d'ajustement de la tension du tissu de fibres (11) en utilisant des moyens d'ajustement de la tension (25) du tissu de fibres (11) portés par le cadre (7).

5. Procédé selon l'une des revendications 1 à 4, **caractérisé en ce qu'**il comporte en outre une étape préliminaire d'assemblage du tissu de fibres (11) à partir de plusieurs éléments (27) de tissu disposés selon les besoins structurels du matériau composite désiré.

6. Procédé selon la revendication 5, **caractérisé en ce que** les différents éléments (27) de tissu diffèrent entre eux par au moins unes des caractéristiques suivantes : leur épaisseur, leur densité, leur matériau, leur traitement préalable, leur empilement.

7. Procédé selon l'une des revendications précédentes, **caractérisé en ce que** le tissu de fibres (11) comporte un des matériaux suivants : fibres de verre, fibres de carbone, fibres d'aramide.

8. Procédé selon l'une des revendications précédentes, **caractérisé en ce que** la matrice comporte un des matériaux suivants : résine thermoplastique, résine époxyde, vinyléther, polyamide, polyester.

9. Moule pour le moulage d'un matériau composite, ledit matériau composite étant apte à comprendre un renfort en tissu de fibres (11) et une matrice durcissante injectable, comportant deux parties complémentaires (3, 5) définissant un espace d'injection (*I*) dans lequel le matériau composite est moulé, **caractérisé en ce qu'**il comporte en outre un logement (9) entourant un espace d'injection (*I*) pour un cadre de maintien (7) formant support pour le tissu de fibres (11) destiné à être escamoté dans ledit logement (9) lors du moulage, le logement (9) étant disposé de sorte à ce que ledit cadre entoure l'espace d'injection (*I*) lorsqu'il est escamoté et étant partagé entre les deux parties (3,5), une partie dudit cadre étant escamoté dans chacune desdites parties (3,5) lorsque celles-ci sont assemblées.

## Patentansprüche

1. Verfahren zum Formen eines Verbundmaterials, **dadurch gekennzeichnet, dass** es Schritte umfasst, in denen:
- ein Fasergewebe (11), das eine Verstärkung bildet, in einem Halterahmen (7) gespannt wird,
- das Fasergewebe (11), das in dem Halterahmen (7) gespannt ist, in einer Form (1) nach Anspruch 9 platziert wird, und der Halterahmen (7) in einer Aufnahme der Form (1) mit entsprechender Form versenkt wird,
- eine Matrix in die Form (1) eingespritzt wird, sodass das Fasergewebe (11) getränkt und so das Verbundmaterial erhalten wird,
- das Verbundmaterial und der Halterahmen (7) aus der Form (1) entnommen werden.

2. Verfahren nach Anspruch 1, **dadurch gekennzeichnet, dass** es ferner einen zusätzlichen Schritt zwischen dem Spannen des Fasergewebes (11) an dem Halterahmen (7) und dem Schritt des Platzierens in der Form (1) umfasst, in der das Fasergewebe (11), das an dem Halterahmen (7) gespannt ist, vorgewärmt wird.

3. Verfahren nach Anspruch 1 oder 2, **dadurch gekennzeichnet, dass** es einen zusätzlichen Schritt zwischen dem Schritt des Platzierens in der Form (1) und dem Schritt des Entnehmens aus der Form (1) umfasst, in dem Befestigungen (15) des Halterahmens (7) von dem Fasergewebe (11) getrennt werden.

4. Verfahren nach einem der Ansprüche 1 bis 3, **dadurch gekennzeichnet, dass** es einen zusätzlichen Schritt zum Anpassen der Spannung des Fasergewebes (11) unter Verwendung von Mitteln zum Anpassen der Spannung (25) des Fasergewebes (11) umfasst, das der Rahmen (7) trägt.

5. Verfahren nach einem der Ansprüche 1 bis 4, **dadurch gekennzeichnet, dass** es ferner einen Vorbereitungsschritt zum Zusammenfügen des Fasergewebes (11) aus mehreren Elementen (27) aus Gewebe umfasst, die entsprechend den Strukturanforderungen an das gewünschte Verbundmaterial angeordnet sind.

6. Verfahren nach Anspruch 5, **dadurch gekennzeichnet, dass** sich die unterschiedlichen Elemente (27) aus Gewebe durch mindestens eine der folgenden Eigenschaften unterscheiden: ihre Dicke, Dichte, ihr Material, ihre Vorbehandlung, ihre Stapelung.

7. Verfahren nach einem der vorhergehenden Ansprüche, **dadurch gekennzeichnet, dass** das Fasergewebe (11) eins der folgenden Materialien aufweist: Glasfasern, Kohlenstofffasern, Aramidfasern.

8. Verfahren nach einem der vorhergehenden Ansprüche, **dadurch gekennzeichnet, dass** die Matrix eins der folgenden Materialien aufweist: thermoplastisches Harz, Epoxidharz, Vinylether, Polyamid, Polyester.

9. Form zum Formen eines Verbundmaterials, wobei das Verbundmaterial dafür vorgesehen ist, eine Verstärkung aus Fasergewebe (11) und eine einspritzbare härtende Matrix zu umfassen, wobei die Form zwei sich ergänzende Bestandteile (3, 5) aufweist, die einen Einspritzraum (*l*) definieren, in dem das Verbundmaterial geformt wird, **dadurch gekennzeichnet, dass** sie ferner eine Aufnahme (9), die einen Einspritzraum (*l*) umgibt, für einen Halterahmen (7) aufweist, der eine Halterung für das Fasergewebe (11) bildet, die während des Formens in der Aufnahme (9) versenkt werden soll, wobei die Aufnahme (9) so angeordnet ist, dass der Rahmen den Einspritzraum *(l)* umgibt, wenn er versenkt ist, und zwischen den beiden Bestandteilen (3, 5) aufgeteilt ist, wobei eine Komponente des Rahmens in jedem der Bestandteile (3, 5) versenkt ist, wenn diese zusammengesetzt sind.

## Claims

1. Method for molding a composite material, **characterized in that** it comprises steps in which:
- a fiber fabric (11) which forms a reinforcement is tightened in a retention frame (7);
- the fiber fabric (11) which is tightened in the retention frame (7) is put into place in a mold (1) according to Claim 9, and the retention frame (7) is retracted in a receptacle with a corresponding form, of the mold (1);
- a matrix is injected into the mold (1) such as to impregnate the fiber fabric (11) in order to obtain the composite material;
- the composite material and the retention frame (7) are withdrawn from the mold (1).

2. Method according to Claim 1, **characterized in that** it also comprises an additional step between the tightening of the fiber fabric (11) on the retention frame (7) and the step of putting into place in the mold (1), wherein the fiber fabric (11) tightened on the retention frame (7) is preheated.

3. Method according to Claim 1 or 2, **characterized in that** it comprises an additional step between the step of putting into place in the mold (1) and the step of removal from the mold (1), wherein attachments (15) of the retention frame (7) are separated from the fiber fabric (11).

4. Method according to one of Claims 1 to 3, **characterized in that** it comprises an additional step of adjustment of the tension of the fiber fabric (11) by using means (25) for adjustment of the tension of the fiber fabric (11) supported by the frame (7).

5. Method according to one of Claims 1 to 4, **characterized in that** it also comprises a preliminary step of assembly of the fiber fabric (11) from a plurality of fabric elements (27) disposed according to the structural needs of the composite material required.

6. Method according to Claim 5, **characterized in that** the various elements of the fabric (27) differ from one another by at least one of the following characteristics: their thickness, their density, their material, their prior treatment, their stacking.

7. Method according to one of the preceding claims, **characterized in that** the fiber fabric (11) comprises one of the following materials: glass fibers, carbon fibers, aramid fibers.

8. Method according to one of the preceding claims, **characterized in that** the matrix comprises one of the following materials: thermoplastic resin, epoxide resin, vinyl ether, polyamide, polyester.

9. Mold for molding a composite material, said composite material being able to comprise a fiber fabric (11) reinforcement and an injectable hardening matrix, comprising two complementary parts (3, 5) which define an injection space (I) in which the composite material is molded, **characterized in that** it also comprises a receptacle (9) which surrounds an injection space (I) for a retention frame (7) forming a support for the fiber fabric (11), which frame is designed to be retracted in said receptacle (9) during the molding, the receptacle (9) being disposed such that said frame surrounds the injection space (I) when it is retracted and being shared between the two parts (3, 5,) with a part of said frame being retracted into each of said parts (3, 5) when they are assembled.
